# EUROPEAN PATENT APPLICATION

(11) **EP 3 730 586 A1**
(43) Date of publication of application: **28.10.2020**
(21) Application number: 18893256.0
(22) Date of filing: 18.12.2018
(51) Int. Cl.: C09K 5/04, F25B 1/00

(54) **COOLANT-CONTAINING COMPOSITION, USE FOR SAME, REFRIGERATOR HAVING SAME, AND METHOD FOR OPERATING REFRIGERATOR**

(30) Priority: 18.12.2017 JP 2017242186
(71) Applicant: DAIKIN INDUSTRIES, LTD., Osaka 530-8323 (JP)
(72) Inventor: ITANO, Mitsushi, Osaka-shi, Osaka 530-8323 (JP); KARUBE, Daisuke, Osaka-shi, Osaka 530-8323 (JP); YOTSUMOTO, Yuuki, Osaka-shi, Osaka 530-8323 (JP); TAKAHASHI, Kazuhiro, Osaka-shi, Osaka 530-8323 (JP)
(74) Representative: Hoffmann Eitle
(86) International application number: PCT/JP2018/046642
(87) International publication number: WO 2019/124402

(57) **Abstract**

Provided is a mixed refrigerant having two types of performance, i.e., a coefficient of performance that is equivalent to that of R410A and a sufficiently low GWP. Provided as a means for a solution is a composition comprising a refrigerant, the refrigerant comprising trans-1,2-difluoroethylene (HFO-1132(E)), trifluoroethylene (HFO-1123), and difluoromethane (R32) at specific concentrations.

## Description

### Technical Field

The present disclosure relates to a composition comprising a refrigerant, use of the composition, a refrigerating machine having the composition, and a method for operating the refrigerating machine.

### Background Art

R410A is currently used as an air conditioning refrigerant for home air conditioners etc. R410A is a two-component mixed refrigerant of difluoromethane (CH₂F₂: HFC-32 or R32) and pentafluoroethane (C₂HF₅: HFC-125 or R125), and is a pseudo-azeotropic composition.

However, the global warming potential (GWP) of R410A is 2088. Due to growing concerns about global warming, R32, which has a GWP of 675, has been increasingly used.

For this reason, various low-GWP mixed refrigerants that can replace R410A have been proposed (PTL 1).

### Citation List

### Patent Literature

PTL 1: WO2015/141678

### Summary of Invention

### Technical Problem

The present inventors performed independent examination, and conceived of the idea that no prior art had developed refrigerant compositions having two types of performance, i.e., a coefficient of performance (COP) that is equivalent to that of R410A and a sufficiently low GWP. An object of the present disclosure is to solve this unique problem.

### Solution to Problem

### Item 1.

A composition comprising a refrigerant, the refrigerant comprising trans-1,2-difluoroethylene (HFO-1132(E)), trifluoroethylene (HFO-1123), and difluoromethane (R32), wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments OC', C'D', D'E', E'A', and A'O that connect the following 5 points:
   point O (100.0, 0.0, 0.0),
   point C' (56.7, 43.3, 0.0),
   point D' (52.2, 38.3, 9.5),
   point E' (41.8, 39.8, 18.4), and
   point A' (81.6, 0.0, 18.4),
   or on the line segments C'D', D'E', and E'A' (excluding the points C' and A');
the line segment C'D' is represented by coordinates (-0.0297z²-0.1915z+56.7, 0.0297z²-0.8085z+43.3, z),
the line segment D'E' is represented by coordinates (-0.0535z²+0.3229z+53.957, 0.0535z²-1.3229z+46.043, z), and
the line segments OC', E'A', and A'O are straight lines.

### Item 2.

A composition comprising a refrigerant, the refrigerant comprising trans-1,2-difluoroethylene (HFO-1132(E)), trifluoroethylene (HFO-1123), and difluoromethane (R32), wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments OC, CD, DE, EA', and A'O that connect the following 5 points:
   point O (100.0, 0.0, 0.0),
   point C (77.7, 22.3, 0.0),
   point D (76.3, 14.2, 9.5),
   point E (72.2, 9.4, 18.4), and
   point A' (81.6, 0.0, 18.4),
   or on the line segments CD, DE, and EA' (excluding the points C and A');
the line segment CDE is represented by coordinates (-0.017z²+0.0148z+77.684, 0.017z²-1.0148z+22.316, z), and
the line segments OC, EA', and A'O are straight lines.

### Item 3.

A composition comprising a refrigerant, the refrigerant comprising trans-1,2-difluoroethylene (HFO-1132(E)), trifluoroethylene (HFO-1123), and difluoromethane (R32),
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments OC', C'D', D'A, and AO that connect the following 4 points:
   point O (100.0, 0.0, 0.0),
   point C' (56.7, 43.3, 0.0),
   point D' (52.2, 38.3, 9.5), and
   point A (90.5, 0.0, 9.5),
   or on the line segments C'D' and D'A (excluding the points C' and A) ;
the line segment C'D' is represented by coordinates (-0.0297z²-0.1915z+56.7, 0.0297z²-0.8085z+43.3, z), and
the line segments OC', D'A, and AO are straight lines.

### Item 4.

A composition comprising a refrigerant, the refrigerant comprising trans-1,2-difluoroethylene (HFO-1132(E)), trifluoroethylene (HFO-1123), and difluoromethane (R32), wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments OC, CD, DA, and AO that connect the following 4 points:
   point O (100.0, 0.0, 0.0),
   point C (77.7, 22.3, 0.0),
   point D (76.3, 14.2, 9.5), and
   point A (90.5, 0.0, 9.5),
   or on the line segments CD and DA (excluding the points C and A);
the line segment CD is represented by coordinates (-0.017z²+0.0148z+77.684, 0.017z²-1.0148z+22.316, z), and
the line segments OC, DA, and AO are straight lines.

### Item 5.

The composition according to any one of Items 1 to 4, for use as a working fluid for a refrigerating machine, wherein the composition further comprises a refrigeration oil.

### Item 6.

The composition according to any one of Items 1 to 5, for use as an alternative refrigerant for R410A.

### Item 7.

Use of the composition according to any one of Items 1 to 5 as an alternative refrigerant for R410A.

### Item 8.

A refrigerating machine comprising the composition according to any one of Items 1 to 5 as a working fluid.

### Item 9.

A method for operating a refrigerating machine, comprising the step of circulating the composition according to any one of Items 1 to 5 as a working fluid in a refrigerating machine.

### Advantageous Effects of Invention

The refrigerant according to the present disclosure has two types of performance, i.e., a coefficient of performance that is equivalent to that of R410A and a sufficiently low GWP.

### Brief Description of Drawings

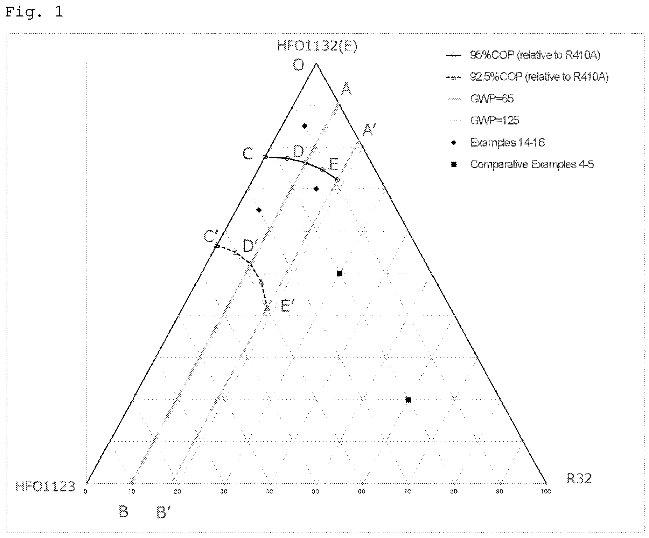

Fig. 1 is a view showing points A to D, A' to D', and O; and line segments that connect the points in a ternary composition diagram in which the sum of HFO-1132(E), HFO-1123, and R32 is 100 mass%.

### Description of Embodiments

The present inventors conducted intensive studies to solve the above problem, and consequently found that a mixed refrigerant comprising trans-1,2-difluoroethylene (HFO-1132(E)), trifluoroethylene (HFO-1123), and difluoromethane (HFC-32 or R32) has the properties described above.

The present disclosure has been completed as a result of further research based on this finding. The present disclosure includes the following embodiments.

### Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having a "lower flammability" means that it is determined to be classified as "Class 2L" according to the US ANSI/ASHRAE Standard 34-2013.

### 1. Refrigerant

### 1.1 Refrigerant Component

The refrigerant according to the present disclosure is a mixed refrigerant comprising trans-1,2-difluoroethylene (HFO-1132(E)), trifluoroethylene (HFO-1123), and difluoromethane (R32).

The refrigerant according to the present disclosure has various properties that are desirable as an R410A-alternative refrigerant, i.e., a coefficient of performance equivalent to that of R410A and a sufficiently low GWP.

The refrigerant according to the present disclosure is preferably a refrigerant wherein
when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments OC', C'D', D'E', E'A', and A'O that connect the following 5 points:
   point O (100.0, 0.0, 0.0),
   point C' (56.7, 43.3, 0.0),
   point D' (52.2, 38.3, 9.5),
   point E' (41.8, 39.8, 18.4), and
   point A' (81.6, 0.0, 18.4),
   or on the line segments C'D', D'E', and E'A' (excluding the points C' and A');
the line segment C'D' is represented by coordinates (-0.0297z²-0.1915z+56.7, 0.0297z²-0.8085z+43.3, z),
the line segment D'E' is represented by coordinates (-0.0535z²+0.3229z+53.957, 0.0535z²-1.3229z+46.043, z), and
the line segments OC', E'A', and A'O are straight lines. When the requirements above are satisfied, the refrigerant according to the present disclosure has a COP ratio of 92.5% or more relative to that of R410A, and a GWP of 125 or less.

The refrigerant according to the present disclosure is preferably a refrigerant wherein
when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments OC, CD, DE, EA', and A'O that connect the following 5 points:
   point O (100.0, 0.0, 0.0),
   point C (77.7, 22.3, 0.0),
   point D (76.3, 14.2, 9.5),
   point E (72.2, 9.4, 18.4), and
   point A' (81.6, 0.0, 18.4),
   or on the line segments CD, DE, and EA' (excluding the points C and A');
the line segment CDE is represented by coordinates (-0.017z²+0.0148z+77.684, 0.017z²-1.0148z+22.316, z), and
the line segments OC, EA', and A'O are straight lines. When the requirements above are satisfied, the refrigerant according to the present disclosure has a COP ratio of 95% or more relative to that of R410A, and a GWP of 125 or less.

The refrigerant according to the present disclosure is preferably a refrigerant wherein
when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments OC', C'D', D'A, and AO that connect the following 4 points:
   point O (100.0, 0.0, 0.0),
   point C' (56.7, 43.3, 0.0),
   point D' (52.2, 38.3, 9.5), and
   point A (90.5, 0.0, 9.5),
   or on the line segments C'D' and D'A (excluding the points C' and A) ;
the line segment C'D' is represented by coordinates (-0.0297z²-0.1915z+56.7, 0.0297z²-0.8085z+43.3, z), and
the line segments OC', D'A, and AO are straight lines. When the requirements above are satisfied, the refrigerant according to the present disclosure has a COP ratio of 93.5% or more relative to that of R410A, and a GWP of 65 or less.

The refrigerant according to the present disclosure is preferably a refrigerant wherein
when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments OC, CD, DA, and AO that connect the following 4 points:
   point O (100.0, 0.0, 0.0),
   point C (77.7, 22.3, 0.0),
   point D (76.3, 14.2, 9.5), and
   point A (90.5, 0.0, 9.5),
   or on the line segments CD and DA (excluding the points C and A);
the line segment CD is represented by coordinates (-0.017z²+0.0148z+77.684, 0.017z²-1.0148z+22.316, z), and
the line segments OC, DA, and AO are straight lines. When the requirements above are satisfied, the refrigerant according to the present disclosure has a COP ratio of 95% or more relative to that of R410A, and a GWP of 65 or less.

The refrigerant according to the present disclosure may further comprise other additional refrigerants in addition to HFO-1132(E), HFO-1123, and R32, as long as the above properties and effects are not impaired. In this respect, the refrigerant according to the present disclosure preferably comprises HFO-1132(E), HFO-1123, and R32 in a total amount of 99.5 mass% or more, more preferably 99.75 mass% or more, and even more preferably 99.9 mass% or more, based on the entire refrigerant.

Such additional refrigerants are not limited, and can be selected from a wide range of refrigerants. The mixed refrigerant may comprise a single additional refrigerant, or two or more additional refrigerants.

### 1.2. Use

The refrigerant according to the present disclosure can be preferably used as a working fluid in a refrigerating machine.

The composition according to the present disclosure is suitable for use as an alternative refrigerant for R410A.

### 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

### 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃Cl)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152a (1,1-difluoroethane, CHF₂CH₃)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The refrigerant composition according to the present disclosure may contain one or more tracers at a total concentration of about 10 parts per million by weight (ppm) to about 1000 ppm, based on the entire refrigerant composition. The refrigerant composition according to the present disclosure may preferably contain one or more tracers at a total concentration of about 30 ppm to about 500 ppm, and more preferably about 50 ppm to about 300 ppm, based on the entire refrigerant composition.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

### 3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 to 50 mass% of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt at 40°C is preferable from the standpoint of lubrication.

The refrigeration oil-containing working fluid according to the present disclosure may further optionally contain at least one additive. Examples of additives include compatibilizing agents described below.

### 3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

The embodiments are described above; however, it will be understood that various changes in forms and details can be made without departing from the spirit and scope of the claims.

### Examples

The present disclosure is described in more detail below with reference to Examples. However, the present disclosure is not limited to the Examples.

Mixed refrigerants were prepared by mixing HFO-1132(E), HFO-1123, and R32 at mass% based on their sum shown in Tables 1 to 3.

The COP ratio and the refrigerating capacity (which may be referred to as "cooling capacity" or "capacity") ratio relative to those of R410 of the mixed refrigerants were determined. The conditions for calculation were as described below.
Evaporating temperature: 5°C
Condensation temperature: 45°C
Degree of superheating: 1K
Degree of subcooling: 5K
E_{comp} (compressive modulus): 0.7 kWh

Tables 1 to 3 show these values together with the GWP of each mixed refrigerant.

**Table 1**

| Item | Unit | Comparative Example 1 | Comparative Example 2 | Example 1 | Example 2 | Example 3 | Example 4 | Comparative Example 3 |
|---|---|---|---|---|---|---|---|---|
| | | | C | | D | | E | O |
| HFO-1132(E) | mass% | R410A | 77.7 | 77.3 | 76.3 | 74.6 | 72.2 | 100.0 |
| HFO-1123 | mass% | | 22.3 | 17.7 | 14.2 | 11.4 | 9.4 | 0.0 |
| R32 | mass% | | 0.0 | 5.0 | 9.5 | 14.0 | 18.4 | 0.0 |
| GWP | - | 2088 | 1 | 35 | 65 | 95 | 125 | 1 |
| COP ratio | % (relative to R410A) | 100.0 | 95.0 | 95.0 | 95.0 | 95.0 | 95.0 | 97.8 |
| Refrigerating capacity ratio | % (relative to R410A) | 100.0 | 102.5 | 104.4 | 106.0 | 107.6 | 109.1 | 97.8 |

**Table 2**

| Item | Unit | Comparative Example 4 | Example 5 | Example 6 | Example 7 | Example 8 | Comparative Example 5 | Comparative Example 6 |
|---|---|---|---|---|---|---|---|---|
| | | C' | | D' | | E' | A | B |
| HFO-1132(E) | mass% | 56.7 | 55.0 | 52.2 | 48.0 | 41.8 | 90.5 | 0.0 |
| HFO-1123 | mass% | 43.3 | 40.0 | 38.3 | 38.0 | 39.8 | 0.0 | 90.5 |
| R32 | mass% | 0.0 | 5.0 | 9.5 | 14.0 | 18.4 | 9.5 | 9.5 |
| GWP | - | 1 | 35 | 65 | 95 | 125 | 65 | 65 |
| COP ratio | % (relative to R410A) | 92.5 | 92.5 | 92.5 | 92.5 | 92.5 | 96.6 | 90.8 |
| Refrigerating capacity ratio | % (relative to R410A) | 105.8 | 107.9 | 109.7 | 111.5 | 113.2 | 103.2 | 111.0 |

**Table 3**

| Item | Unit | Comparative Example 7 | Comparative Example 8 | Exampl e9 | Example 10 | Exampl e 11 | Comparative Example 9 | Comparative Example 10 |
|---|---|---|---|---|---|---|---|---|
| | | A | B' | | | | | |
| HFO-1132(E) | mass% | 81.6 | 0.0 | 85.0 | 65.0 | 70.0 | 50.0 | 20.0 |
| HFO-1123 | mass% | 0.0 | 81.6 | 10.0 | 30.0 | 15.0 | 20.0 | 20.0 |
| R32 | mass% | 18.4 | 18.4 | 5.0 | 5.0 | 15.0 | 30.0 | 60.0 |
| GWP | - | 125 | 125 | 35 | 35 | 102 | 203 | 405 |
| COP ratio | % (relative to R410A) | 95.9 | 91.9 | 95.9 | 93.6 | 94.6 | 94.3 | 97.6 |
| Refrigerating capacity ratio | % (relative to R410A) | 107.4 | 113.8 | 102.9 | 106.5 | 108.7 | 114.6 | 117.6 |

The results indicate that under the condition that the mass% of HFO-1132(E), HFO-1123, and R32 based on their sum is respectively represented by x, y, and z, when coordinates (x,y,z) in a ternary composition diagram in which the sum of HFO-1132(E), HFO-1123, and R32 is 100 mass% are within the range of a figure (Fig. 1) surrounded by line segments OC', C'D', D'E', E'A', and A'O that connect the following 5 points:
point O (100.0, 0.0, 0.0),
point C' (56.7, 43.3, 0.0),
point D' (52.2, 38.3, 9.5),
point E' (41.8, 39.8, 18.4), and
point A' (81.6, 0.0, 18.4),
or on the line segments C'D', D'E', and E'A' (excluding the points C' and A'),
the refrigerant has a COP ratio of 92.5% or more relative to that of R410A, and a GWP of 125 or less.

The results also indicate that when coordinates (x,y,z) are within the range of a figure (Fig. 1) surrounded by line segments OC, CD, DE, EA', and A'O that connect the following 5 points:
point O (100.0, 0.0, 0.0),
point C (77.7, 22.3, 0.0),
point D (76.3, 14.2, 9.5),
point E (72.2, 9.4, 18.4), and
point A' (81.6, 0.0, 18.4),
or on the line segments CD, DE, and EA' (excluding the points C and A'),
the refrigerant has a COP ratio of 95% or more relative to that of R410A, and a GWP of 125 or less.

The results also indicate that when coordinates (x,y,z) are within the range of a figure (Fig. 1) surrounded by line segments OC', C'D', D'A, and AO that connect the following 4 points:
point O (100.0, 0.0, 0.0),
point C' (56.7, 43.3, 0.0),
point D' (52.2, 38.3, 9.5), and
point A (90.5, 0.0, 9.5),
or on the line segments C'D' and D'A (excluding the points C' and A),
the refrigerant has a COP ratio of 92.5% or more relative to that of R410A, and a GWP of 65 or less.

The results also indicate that when coordinates (x,y,z) are within the range of a figure (Fig. 1) surrounded by line segments OC, CD, DA, and AO that connect the following 4 points:
point O (100.0, 0.0, 0.0),
point C (77.7, 22.3, 0.0),
point D (76.3, 14.2, 9.5), and
point A (90.5, 0.0, 9.5),
or on the line segments CD and DA (excluding the points C and A), the refrigerant has a COP ratio of 95% or more relative to that of R410A, and a GWP of 65 or less.

In contrast, as shown in Comparative Examples 2, 3, and 4, when R32 is not contained, the concentrations of HFO-1132(E) and HFO-1123, which have a double bond, become relatively high; this undesirably leads to deterioration, such as decomposition, or polymerization in the refrigerant compound.

Moreover, as shown in Comparative Examples 3, 5, and 7, when HFO-1123 is not contained, the combustion-inhibiting effect thereof cannot be obtained; thus, undesirably, a composition having lower flammability cannot be obtained.

## Claims

1. A composition comprising a refrigerant, the refrigerant comprising trans-1,2-difluoroethylene (HFO-1132(E)), trifluoroethylene (HFO-1123), and difluoromethane (R32),
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments OC', C'D', D'E', E'A', and A'O that connect the following 5 points:
point O (100.0, 0.0, 0.0),
point C' (56.7, 43.3, 0.0),
point D' (52.2, 38.3, 9.5),
point E' (41.8, 39.8, 18.4), and
point A' (81.6, 0.0, 18.4),
or on the line segments C'D', D'E', and E'A' (excluding the points C' and A');
the line segment C'D' is represented by coordinates (-0.0297z²-0.1915z+56.7, 0.0297z²-0.8085z+43.3, z),
the line segment D'E' is represented by coordinates (-0.0535z²+0.3229z+53.957, 0.0535z²-1.3229z+46.043, z), and
the line segments OC', E'A', and A'O are straight lines.

2. A composition comprising a refrigerant, the refrigerant comprising trans-1,2-difluoroethylene (HFO-1132(E)), trifluoroethylene (HFO-1123), and difluoromethane (R32),
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments OC, CD, DE, EA', and A'O that connect the following 5 points:
point O (100.0, 0.0, 0.0),
point C (77.7, 22.3, 0.0),
point D (76.3, 14.2, 9.5),
point E (72.2, 9.4, 18.4), and
point A' (81.6, 0.0, 18.4),
or on the line segments CD, DE, and EA' (excluding the points C and A');
the line segment CDE is represented by coordinates (-0.017z²+0.0148z+77.684, 0.017z²-1.0148z+22.316, z), and
the line segments OC, EA', and A'O are straight lines.

3. A composition comprising a refrigerant, the refrigerant comprising trans-1,2-difluoroethylene (HFO-1132(E)), trifluoroethylene (HFO-1123), and difluoromethane (R32),
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments OC', C'D', D'A, and AO that connect the following 4 points:
point O (100.0, 0.0, 0.0),
point C' (56.7, 43.3, 0.0),
point D' (52.2, 38.3, 9.5), and
point A (90.5, 0.0, 9.5),
or on the line segments C'D' and D'A (excluding the points C' and A) ;
the line segment C'D' is represented by coordinates (-0.0297z²-0.1915z+56.7, 0.0297z²-0.8085z+43.3, z), and
the line segments OC', D'A, and AO are straight lines.

4. A composition comprising a refrigerant, the refrigerant comprising trans-1,2-difluoroethylene (HFO-1132(E)), trifluoroethylene (HFO-1123), and difluoromethane (R32),
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments OC, CD, DA, and AO that connect the following 4 points:
point O (100.0, 0.0, 0.0),
point C (77.7, 22.3, 0.0),
point D (76.3, 14.2, 9.5), and
point A (90.5, 0.0, 9.5),
or on the line segments CD and DA (excluding the points C and A);
the line segment CD is represented by coordinates (-0.017z²+0.0148z+77.684, 0.017z²-1.0148z+22.316, z), and
the line segments OC, DA, and AO are straight lines.

5. The composition according to any one of claims 1 to 4, for use as a working fluid for a refrigerating machine, wherein the composition further comprises a refrigeration oil.

6. The composition according to any one of claims 1 to 5, for use as an alternative refrigerant for R410A.

7. Use of the composition according to any one of claims 1 to 5 as an alternative refrigerant for R410A.

8. A refrigerating machine comprising the composition according to any one of claims 1 to 5 as a working fluid.

9. A method for operating a refrigerating machine, comprising the step of circulating the composition according to any one of claims 1 to 5 as a working fluid in a refrigerating machine.
